# EUROPÄISCHE PATENTSCHRIFT

(11) **EP 1 357 278 B1**
(45) Veröffentlichungstag und Bekanntmachung des Hinweises auf die Patenterteilung: **05.04.2006**
(21) Anmeldenummer: 03000777.7
(22) Anmeldetag: 14.01.2003
(51) Int. Cl.: F02C 6/12, F01D 9/02, F01D 25/26

(54) **Abgasturbine für einen Turbolader**
Exhaust gas turbine for a turbocharger
Turbine à gaz d'échappement pour compresseur de suralimentation

(30) Priorität: 25.04.2002 DE 10218436
(43) Veröffentlichungstag der Anmeldung: 29.10.2003
(73) Patentinhaber: Benteler Automobiltechnik GmbH, 33104 Paderborn (DE)
(72) Erfinder: Smatloch, Christian, Dr., 33100 Paderborn (DE); Gussmann, Elmar, 33184 Altenbeken (DE)
(74) Vertreter: Griepenstroh, Jörg

(56) Entgegenhaltungen:
- EP-A- 0 187 486
- WO-A-02/29211
- DE-A- 10 022 052
- DE-A- 10 028 160
- DE-A- 10 061 846
- GB-A- 1 199 158
- GB-A- 1 263 932
- US-A- 2 801 043

## Beschreibung

Die Erfindung betrifft eine Abgasturbine für einen Turbolader, die ein von einer doppelwandigen Ummantelung umhülltes Turbinenrad aufweist.

Zur Leistungssteigerung und Verbesserung des Drehmomentenverlaufs werden Turbolader bei der sogenannten Aufladung einer Brennkraftmaschine eingesetzt. Hierbei wird ein Teil der an sich verlorenen Abgasenergie zum Antrieb einer Abgasturbine genutzt, welche über eine Welle mit einem Aufladegebläse (Luftverdichter) für die Ansaugluft gekoppelt ist. Dieses drückt die verdichtete Luft in die Zylinder der Brennkraftmaschine, wodurch mehr Masse für die Verbrennung zur Verfügung steht.

Die Gehäuse der Abgasturbinen heutiger Turbolader mit Radialturbinen für Brennkraftmaschinen sind üblicherweise in Guss ausgeführt. Dies ist aufgrund der komplizierten, den Erfordernissen der Strömungsmechanik angepassten schneckenförmigen Gasführungskanäle sowie wegen der hohen auftretenden Temperaturen zweckmäßig. Die Gussausführung führt allerdings zu einem relativ hohen Gewicht der Turbolader.

Gussgehäuse mit ihrer hohen Masse entziehen dem Abgas, insbesondere in der Aufheizphase, viel Wärme. Die Aufheizphase, während der toxische Abgaskomponenten an die Atmosphäre abgegeben werden, ist somit relativ lang. Dies führt dazu, dass ein Katalysator zeitlich erst viel später mit der Oxidation von z.B. Kohlenmonoxid beginnen kann. Dieser Sachverhalt ist insbesondere unter ökologischen Aspekten nachteilig. Neueste Abgasvorschriften, die eine Messung der Abgasemission von Brennkraftmaschinen im Kaltstart vorschreiben, können so nicht erfüllt werden.

Die Abgasemissionsvorschriften ebenso wie wirtschaftliche Aspekte, insbesondere hinsichtlich eines geringen Kraftstoffverbrauchs, führen heute weiterhin dazu, dass die Abgastemperaturen von Brennkraftmaschinen immer höher werden. Somit steigen die Anforderungen an die einzusetzenden Gehäusewerkstoffe erheblich. Die Wanddicken lassen sich jedoch aus gusstechnologischen Gründen nicht beliebig dünn ausführen. Insgesamt ist eine Abnahme der Lebensdauer eines Turboladers zu erwarten.

Zum Stand der Technik zählen auch Abgasturbinen in Blechbauweise (DE 100 22 052 A1).

Blechkonstruktionen wurden im Pkw-Bereich bislang nicht eingesetzt. Sie weisen nämlich den Nachteil geringerer Berstsicherheit in den Betriebssituationen auf, in welchen die Turbinenlaufräder mit zu hohen Drehzahlen belastet und dadurch zerstört werden.

Hinzu kommt, dass insbesondere bei 4-Zylinder-Brennkraftmaschinen die abgasseitigen Turbinengehäuse zweiflutig ausgeführt werden. Das heißt, die Abgasströme von jeweils zwei Zylindern einer Brennkraftmaschine werden bis zum Turbinenlaufrad getrennt geführt. Hiermit ist eine erhebliche Erhöhung der Dynamik des Ansprechverhaltens sowie eine zusätzliche Leistungssteigerung bzw. ein optimierter Gesamtwirkungsgrad des Systems gegenüber einem einflutigen System verbunden.

Der Erfindung liegt - ausgehend vom Stand der Technik - die Aufgabe zugrunde, eine wirkungsmäßig verbesserte Abgasturbine in zweiflutiger Bauweise zu schaffen, die berstsicher ist, einen geringen Masseeinsatz erfordert, eine erhöhte Dynamik gewährleistet und ein verbessertes Ansprechverhalten sicherstellt.

Diese Aufgabe wird mit den im Patentanspruch 1 angegebenen Merkmalen gelöst.

Der im Innenmantel vorgesehene Trennsteg unterteilt diesen in zwei Kammern, womit die zweiflutige Version gewährleistet ist und besonders 4-Zylinder-Brennkraftmaschinen zum Vorteil gereicht. Ferner ist es von Vorteil, dass durch die Überlappung der sich etwa parallel zur Drehachse des Turbinenlaufrads erstreckenden radial äußeren Axialschenkel des Außenmantels, und zwar unter Bildung eines etwa V-förmigen Spalts, eine deutlich verbesserte Berstsicherheit erreicht wird. In diesem Zusammenhang ist es von Bedeutung, dass sich die beiden Axialschenkel nicht über ihre gesamte Länge berühren, sondern dass nur die Stirnseite des übergreifenden Axialschenkels an der äußeren Oberfläche des eingreifenden Axialschenkels durch Schweißung fixiert ist.

Wenn nun Teilchen hoher Geschwindigkeit auf den eingreifenden Axialschenkel treffen, kann die kinetische Energie dieser Teilchen zunächst in Verformungsenergie des eingreifenden Axialschenkels und, sofern der eingreifende Axialschenkel dann in Kontakt mit dem übergreifenden Axialschenkel gelangt, anschließend auch am übergreifenden Axialschenkel in Verformungsenergie umgewandelt werden.

Es wird also mit der Erfindung das Durchschlagen des Außenmantels im Berstfall verhindert. Durch die Blechkonstruktion wird überdies ein erheblich verringerter Masseeinsatz im Vergleich zu einer Gusskonstruktion erzielt. Hiermit ist eine erhöhte Dynamik des Fahrzeugantriebs verbunden, wodurch auch ein verbessertes Ansprechverhalten des gesamten Antriebssystems erzielt wird.

Die Außenschalen können wie die Innenschalen einlagig ausgebildet sein. Denkbar ist aber auch eine Gestaltung des Außenmantels aus Duplexblechen mit gleichem Materialeinsatz bzw. gleicher Masse. Dadurch können eine noch höhere Absorption von kinetischer Energie und eine weitere Verminderung der Geräuschabstrahlung erzielt werden.

Die Innenschalen des Innenmantels können nach Patentanspruch 2 mit dem Trennsteg durch Schweißung gefügt sein. In diesem Zusammenhang besteht eine Ausführungsform darin, dass die radial äußeren Randbereiche der Innenschalen parallel zum radial äußeren Randbereich des Trennstegs geführt und diese Randbereiche gemeinsam vom radial äußeren Umfang her verschweißt werden.

Eine andere Möglichkeit der Schweißverbindung der Innenschalen mit dem Trennsteg besteht darin, dass der radial äußere Bereich des Trennstegs etwa parallel zur Drehachse des Turbinenlaufrads schenkelartig abgewinkelt wird. Die radial äußeren Randbereiche der Innenschalen werden dann innen- und außenseitig an diesen kurzen Schenkel gelegt und durch eine Kehlnaht umfangsseitig des innen liegenden Randbereichs und stirnseitig des kurzen Schenkels des Trennstegs sowie des außen liegenden Randbereichs die Innenschalen mit dem Trennsteg verschweißt.

Es besteht entsprechend Patentanspruch 3 femer die Möglichkeit, die Innenschalen des Innenmantels unter Lagefixierung des Trennstegs durch Falzung zu fügen. Hierbei wird der radial äußere Randbereich einer Innenschale parallel zum Trennsteg geführt. Dieser Randbereich liegt dann neben dem radial äußeren Randbereich des Trennstegs. Der radial äußere Randbereich der anderen Innenschale wird zunächst ebenfalls parallel zum Trennsteg geführt und dann um die radial äußeren Randbereiche des Trennstegs sowie der benachbarten Innenschale gebogen. Auf diese Weise werden die Innenschalen mit dem Trennsteg sicher verklammert.

Um die Umwandlung der kinetischen Energie durch Teilchen hoher Geschwindigkeit in Verformungsenergie zu verbessern, ist es entsprechend den Merkmalen des Patentanspruchs 4 möglich, in den Spalt zwischen den radial äußeren Axialschenkeln der Außenschalen des Außenmantels kinetische Energie in Verformungsenergie umwandelnde Mittel zu integrieren. Solche Mittel können z.B. durch Drahtgestricke oder zusätzliche Blecheinlagen gebildet sein, die in den Spalt eingebettet werden.

In weiterer Ausgestaltung des erfindungsgemäßen Grundgedankens sind nach Patentanspruch 5 die der Drehachse des Turbinenlaufrads benachbarten inneren Endabschnitte der dem Lagergehäuse für das Turbinenlaufrad abgewandten Innen- und Außenschalen unter stutzenartiger Ausbildung ineinander gesteckt und miteinander gefügt. Auf diese Weise werden zusätzliche Flansche vermieden. Zweckmäßig liegt die Stirnseite der Innenschale im Abstand von der Stirnseite der Außenschale, so dass hier mittels Schweißung eine Kehlnaht zwischen der inneren Oberfläche der Außenschale und der Stirnfläche der Innenschale gelegt werden kann.

Die Verbindung des Außenmantels mit dem Lagergehäuse für das Turbinenlaufrad kann mit den Merkmalen des Patentanspruchs 6 erfolgen. Dazu wird der radial innen liegende Randbereich eines sich quer zur Drehachse des Turbinenlaufrads erstreckenden Radialschenkels einer Außenschale an einem umfangsseitigen Absatz eines Flanschstutzens mittels Kehlnaht verschweißt. Der Flansch ist seinerseits mit dem Lagergehäuse für das Turbinenlaufrad verbunden. Der Absatz befindet sich etwa im mittleren Längenabschnitt des Flanschstutzens.

Auch die Festlegung des Innenmantels am Lagergehäuse erfolgt gemäß Patentanspruch 7 über diesen Flansch. Hierbei wird jedoch der radial innen liegende Randbereich der dem Lagergehäuse benachbarten Innenschale des Innenmantels stirnseitig an den Flanschstutzen angesetzt und mit diesem verschweißt.

Nach Patentanspruch 8 ist die Dicke der Innenschalen kleiner als die Dicke der Außenschalen bemessen. Somit können die Innenschalen des Innenmantels sehr dünnwandig ausgeführt werden, wodurch sie sich im Betrieb sehr schnell erwärmen. Hierdurch wird das Anspringverhalten eines Katalysators erheblich beschleunigt. Der Schadstoffausstoß, insbesondere beim Kaltstart, wird erheblich reduziert.

Des Weiteren ermöglicht es die Erfindung, dass für den Innenmantel und den Außenmantel unterschiedliche auf ihre jeweilige Funktion spezifisch abgestimmte Werkstoffe verwendet werden können. Der Innenmantel besteht bevorzugt aus einem hochwarmfesten Werkstoff. Dazu können dünnwandige Bleche eingesetzt werden. Dies wirkt sich kostenmäßig vorteilhaft aus. Der Außenmantel kann demgegenüber aus kostengünstigen Werkstoffen bestehen, da hier die Temperaturbelastung durch die Isolationswirkung des Luftspalts zwischen dem Innenmantel und dem Außenmantel erheblich geringer ist.

Denkbar ist es auch, dass zwischen dem Innenmantel und dem Außenmantel ein Dämmmaterial eingebracht wird. Durch diese zusätzliche Maßnahme kann der Wärmetransport nach außen verringert werden.

Die Erfindung ist nachfolgend anhand von in den Zeichnungen dargestellten Ausführungsbeispielen näher erläutert. Es zeigen:

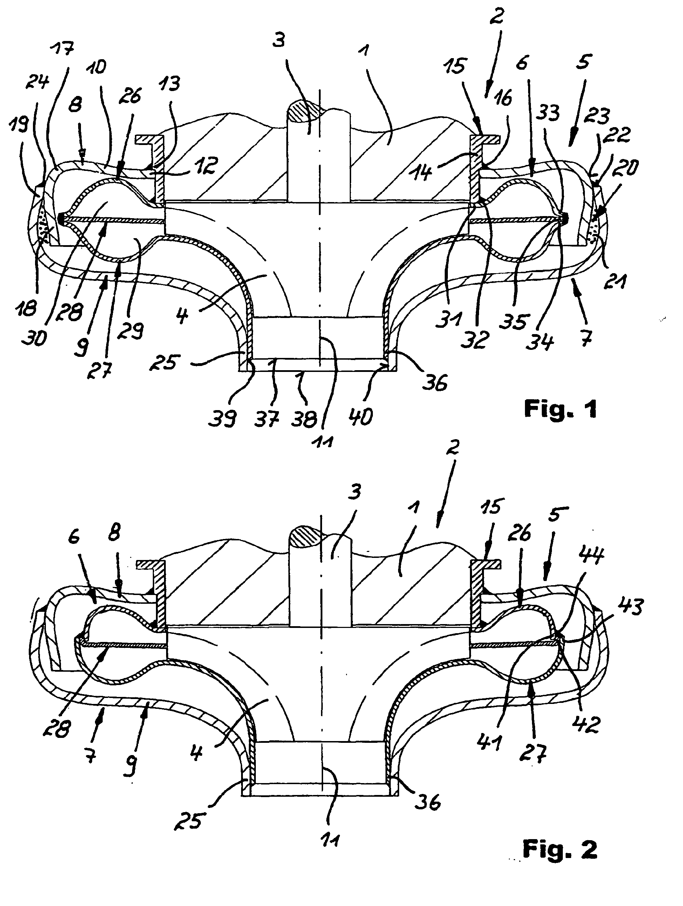

- Figuren 1 bis 3: jeweils im schematischen Längsschnitt einen Abschnitt einer Abgasturbine für einen Turbolader.

In den Figuren 1 bis 3 ist übereinstimmend mit 1 ein Lagergehäuse für eine Abgasturbine 2 bezeichnet, welches der Lagerung der Welle 3 eines Turbinenlaufrads 4 dient.

Das Turbinenlaufrad 4 wird von einer doppelwandigen Ummantelung 5 umhüllt, welche sich aus einem Innenmantel 6 und einem Außenmantel 7 zusammensetzt.

Der Außenmantel 7 besteht aus zwei Außenschalen 8, 9. Eine 1.Außenschale 8 besitzt einen Radialschenkel 10, dessen der Drehachse 11 des Turbinenlaufrads 4 benachbarter innerer Randbereich 12 an einem Absatz 13 eines Stutzens 14 eines Flansches 15 mit einer Kehlnaht 16 fixiert ist (Figur 1). Der Absatz 13 befindet sich etwa im mittleren Längenabschnitt des Stutzens 14. Der Flansch 15 ist mit dem Lagergehäuse 1 verbunden.

Der Radialschenkel 10 geht über eine Krümmung 17 in einen sich etwa parallel zur Drehachse 11 erstreckenden radial äußeren Axialschenkel 18 über. Dieser Axialschenkel 18 wird von einem Axialschenkel 19 der anderen 2.Außenschale 9 des Außenmantels 7 übergriffen. Hierbei ist durch die spezielle Konfiguration der beiden Axialschenkel 18, 19 dafür Sorge getragen, dass zwischen den Axiaischenkeln 18, 19 ein etwa V-förmiger Spalt 20 gebildet wird. In diesen Spalt 20 kann, wie in Figur 1 angedeutet, ein kinetische Energie in Verformungsenergie umwandelndes Mittel 21, z.B. in Form eines Drahtgestricks oder Blecheinlagen, eingebettet sein. Die schweißtechnische Fügung der beiden Axialschenkel 18, 19 erfolgt dadurch, dass die Stirnseite 22 des übergreifenden Axialschenkels 19 an der äußeren Oberfläche 23 des eingreifenden Axialschenkels 18 in der Nähe der Krümmung 17 mittels einer Kehlnaht 24 fixiert wird.

Die dem Lagergehäuse 1 abgewandte 2.Außenschale 9 des Außenmantels 7 ist im Querschnitt etwa S-förmig ausgebildet und geht an dem der Drehachse 11 benachbarten Ende in einen Axialstutzen 25 über.

Der mit Abstand zum Außenmantel 7 angeordnete Innenmantel 6 setzt sich aus zwei Innenschalen 26, 27 und einem Trennsteg 28 zusammen, wodurch der Innenmantel 6 in zwei Kammern 29, 30 umfangsseitig des Turbinenlaufrads 4 unterteilt ist.

Die dem Lagergehäuse 1 benachbarte 1.Innenschale 26 ist mit ihrem radial innen liegenden Randbereich 31 stirnseitig des Stutzens 14 des Flansches 15 angesetzt und durch eine Kehlnaht 32 mit diesem verschweißt. Die andere im Querschnitt weitgehend S-förmig gestaltete 2.Innenschale 27 ist gemäß der Ausführungsform der Figur 1 mit dem Trennsteg 28 und der dem Lagergehäuse 1 benachbarten 1.Innenschale 26 durch Schweißung gefügt. Zu diesem Zweck sind die radial äußeren Randbereiche 33, 34 der 1. und 2.Innenschalen 26, 27 parallel zum radial äußeren Randbereich 35 des Trennstegs 28 umgebogen und vom radial äußeren Umfang her miteinander verschweißt.

Der radial innere Randbereich der dem Lagergehäuse 1 abgewandten 2. Innenschale 27 ist als Axialstutzen 36 gestaltet und fasst in den Axialstutzen 25 der dem Lagergehäuse 1 abgewandten 2.Außenschale 9 des Außenmantels 7 ein. Die Stirnseite 37 der 2.Innenschale 27 endet vor der Stirnseite 38 der 2.Außenschale 9. Die Stirnseite 37 ist durch eine Kehlnaht 39 mit der inneren Oberfläche 40 des Axialstutzens 25 der 2.Außenschale 9 verschweißt (Figur 1).

Diese Verbindung der Axialstutzen 25 und 36 gilt für alle drei Ausführungsformen.

Die Dicke der Außenschalen 8, 9 des Außenmantels 7 ist größer als die Dicke der Innenschalen 26, 27 des Innenmantels 6 bemessen.

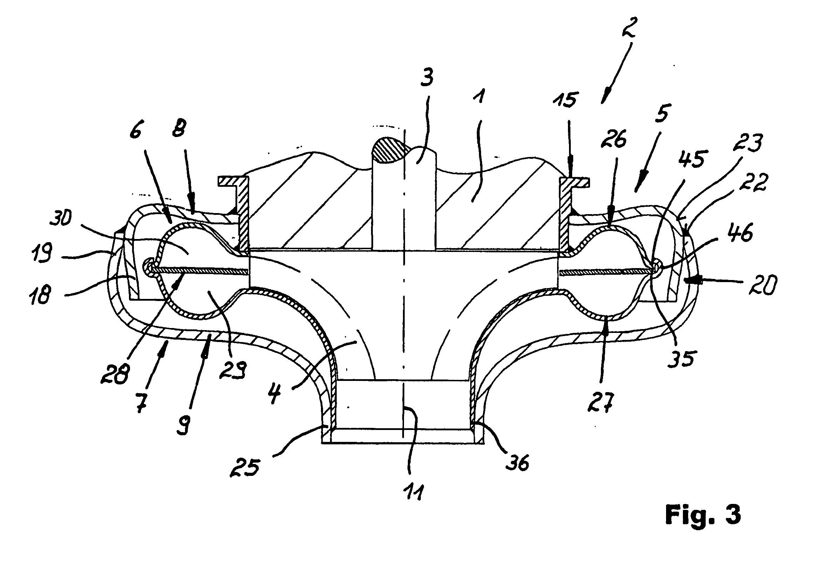

Die Ausführungsform der Figur 2 unterscheidet sich von derjenigen der Figur 1 dadurch, dass die dem Lagergehäuse 1 benachbarte 1.Innenschale 26 des Innenmantels 6 mit ihrem radial äußeren Randbereich 41 innenseitig eines von dem Trennsteg 28 etwa parallel zur Drehachse 11 abgewinkelten kurzen Schenkels 42 liegt, während der radial äußere Randbereich 43 der dem Lagergehäuse 1 abgewandten 2.Innenschale 27 außenseitig dieses Schenkels 42 liegt. Die Randbereiche 41, 43 der beiden Innenschalen 26, 27 werden dann mit der Stirnseite des kurzen Schenkels 42 des Trennstegs 28 durch eine Kehlnaht 44 verschweißt.

Ansonsten entspricht die Ausführungsform der Figur 2 derjenigen der Figur 1, so dass von einer nochmaligen Erläuterung Abstand genommen wird.

Im Rahmen der Ausführungsform der Figur 3 sind die Innenschalen 26, 27 und der Trennsteg 28 des Innenmantels 6 dadurch miteinander verbunden, dass der radial äußere Randbereich 45 der dem Lagergehäuse 1 benachbarten 1.Innenschale 26 parallel zum radial äußeren Randbereich 35 des Trennstegs 28 umgebogen ist. Der radial äußere Randbereich 46 der dem Lagergehäuse 1 abgewandten 2.Innenschale 27 ist zunächst parallel zum äußeren Randbereich 35 des Trennstegs 28 geführt und dann über die beiden äußeren Randbereiche 35 und 45 des Trennstegs 28 sowie der 1.Innenschale 26 gebogen, so dass die Innenschalen 26, 27 und der Trennsteg 28 durch Falzung miteinander fest verklammert sind.

### Bezugszeichenaufstellung

- 1 -: Lagergehäuse f. 3
- 2 -: Abgasturbine
- 3 -: Welle f. 4
- 4 -: Turbinenlaufrad
- 5 -: Ummantelung v. 4
- 6 -: Innenmantel v. 5
- 7 -: Außenmantel v. 5
- 8 -: 1.Außenschale v. 7
- 9 -: 2.Außenschale v. 7
- 10 -: Radialschenkel v. 8
- 11 -: Drehachse v. 4
- 12 -: innerer Randbereich v. 10
- 13 -: Absatz an 14
- 14 -: Stutzen v. 15
- 15 -: Flansch
- 16 -: Kehlnaht
- 17 -: Krümmung v. 8
- 18 -: Axialschenkel v. 8
- 19 -: Axialschenkel v. 9
- 20 -: Spalt zw. 18 u. 19
- 21 -: Mittel in 20
- 22 -: Stirnseite v. 19
- 23 -: Oberfläche v. 18
- 24 -: Kehlnaht zw. 22 u. 23
- 25 -: Axialstutzen v. 9
- 26 -: 1.Innenschale v. 6
- 27 -: 2.Innenschale v. 6
- 28 -: Trennsteg v. 6
- 29 -: 1.Kammer v. 6
- 30 -: 2.Kammer v. 6
- 31 -: innerer Randbereich v. 26
- 32 -: Kehlnaht
- 33 -: äußerer Randbereich v. 26
- 34 -: äußerer Randbereich v. 27
- 35 -: äußerer Randbereich v. 28
- 36 -: Axialstutzen v. 27
- 37 -: Stirnseite v. 27
- 38 -: Stirnseite v. 9
- 39 -: Kehlnaht zw. 37 u. 40
- 40 -: innere Oberfläche v. 25
- 41 -: äußerer Randbereich v. 26
- 42 -: Schenkel v. 28
- 43 -: äußerer Randbereich v. 27
- 44 -: Kehlnaht
- 45 -: äußerer Randbereich v. 26
- 46 -: äußerer Randbereich v. 27

## Patentansprüche

1. Abgasturbine für einen Turbolader, die ein von einer doppelwandigen Ummantelung (5) umhülltes Turbinenlaufrad (4) aufweist, wobei ein mit einem Lagergehäuse (1) für das Turbinenlaufrad (4) verbundener Innenmantel (6) der Ummantelung (5) aus zwei am radial äußeren Umfang gefügten Innenschalen (26, 27) vorgesehen ist, der durch einen radial zur Drehachse (11) des Turbinenlaufrads (4) verlaufenden Trennsteg (28) in zwei Kammern (29, 30) unterteilt ist, und ein den Innenmantel (6) mit Abstand umgebender, ebenfalls mit dem Lagergehäuse (1) verbundener Außenmantel (7) der Ummantelung (5) aus zwei Außenschalen (8, 9) besteht, die sich mit etwa parallel zur Drehachse (11) erstreckenden, radial äußeren Axialschenkeln (18, 19) einen Spalt (20) bildend überlappen, und die Stirnseite (22) des übergreifenden Axialschenkels (19) an der äußeren Oberfläche (23) des eingreifenden Axialschenkels (18) durch Schweißung fixiert ist.

2. Abgasturbine nach Patentanspruch 1, bei welcher die Innenschalen (26, 27) des Innenmantels (6) mit dem Trennsteg (28) durch Schweißung gefügt sind.

3. Abgasturbine nach Patentanspruch 1, bei welcher die Innenschalen (26, 27) des Innenmantels (6) unter Lagefixierung des Trennstegs (28) durch Falzung gefügt sind.

4. Abgasturbine nach einem der Patentansprüche 1 bis 3, bei welcher in den Spalt (20) zwischen den radial äußeren Axialschenkeln (18, 19) der Außenschalen (8, 9) des Außenmantels (7) kinetische Energie umwandelnde Mittel (21) integriert sind.

5. Abgasturbine nach einem der Patentansprüche 1 bis 4, bei welcher die der Drehachse (11) des Turbinenlaufrads (4) benachbarten inneren Randbereiche (36, 25) der dem Lagergehäuse (1) für das Turbinenlaufrad (4) abgewandten 2.Innenschale (27) und 2.Außenschale (9) unter stutzenartiger Ausbildung ineinander gesteckt und miteinander gefügt sind.

6. Abgasturbine nach Patentanspruch 5, bei welcher der radial innen liegende Randbereich (12) eines sich quer zur Drehachse (11) des Turbinenlaufrads (4) erstreckenden Radialschenkels (10) der den eingreifenden Axialschenkel (18) aufweisenden 1.Außenschale (8) des Außenmantels (7) mit einem am Lagergehäuse (1) für das Turbinenlaufrad (4) festgelegten Flansch (15) verbunden ist.

7. Abgasturbine nach einem der Patentansprüche 1 bis 6, bei welcher der radial innen liegende Randbereich (31) der dem Lagergehäuse (1) für das Turbinenlaufrad (4) benachbarten 1.Innenschale (26) des Innenmantels (6) mit einem am Lagergehäuse (1) festgelegten Flansch (15) verbunden ist.

8. Abgasturbine nach einem der Patentansprüche 1 bis 7, bei welcher die Dicke der Innenschalen (26, 27) kleiner als die Dicke der Außenschalen (8, 9) bemessen ist.

## Claims

1. Exhaust gas turbine for a turbocharger which has a turbine rotor (4) enclosed by a double-walled casing (5), a casing (5) inner liner (6) which is connected to a bearing housing (1) for the turbine rotor (4) and which comprises two inner shells (26, 27) joined at their radially outer circumference being provided, which inner liner (6) is divided into two chambers (29, 30) by a dividing web (28) which runs radially with respect to the rotational axis (11) of the turbine rotor (4), and a casing (5) outer liner (7) which is likewise connected to the bearing housing (1) and which surrounds the inner liner (6) at a distance comprising two outer shells (8, 9) whose radially outer axial sides (18, 19), extending approximately parallel to the rotational axis (11), overlap to form a gap (20), and the end side (22) of the outer axial side (19) being fixed to the outer surface (23) of the inner axial side (19) by means of welding.

2. Exhaust gas turbine according to patent Claim 1, in which the inner liner (6) inner shells (26, 27) are joined to the dividing web (28) by means of welding.

3. Exhaust gas turbine according to patent Claim 1, in which the inner liner (6) inner shells (26, 27) are joined by means of seaming with the dividing web (28) fixed in position.

4. Exhaust gas turbine according to one of patent Claims 1 to 3, in which means (21) for converting kinetic energy are integrated in the gap (20) between the radially outer axial sides (18, 19) of the outer shells (8, 9) of the outer liner (7).

5. Exhaust gas turbine according to one of patent Claims 1 to 4, in which the inner edge regions (36, 25), which are adjacent to the rotational axis (11) of the turbine rotor (4), of the second inner shell (27) and second outer shell (9), which face away from the bearing housing (1) for the turbine rotor (4), are, with stub-like design, plugged into one another and joined to one another.

6. Exhaust gas turbine according to patent Claim 5, in which the radially inner edge region (12) of a radial side (10), which extends transversely to the rotational axis (11) of the turbine rotor (4), of the first outer shell (8), which has the inner axial side (18), of the outer liner (7) is connected to a flange (15) which is fixed to the bearing housing (1) for the turbine rotor (4).

7. Exhaust gas turbine according to one of patent Claims 1 to 6, in which the radially inner edge region (31) of the first inner shell (26), which is adjacent to the bearing housing (1) for the turbine rotor (4), of the inner liner (6) is connected to a flange (15) which is fixed to the bearing housing (1).

8. Exhaust gas turbine according to one of patent Claims 1 to 7, in which the thickness of the inner shells (26, 27) is less than the thickness of the outer shells (8, 9).

## Revendications

1. Turbine de gaz d'échappement pour un compresseur de suralimentation, qui présente une roue à aubes de turbine (4) entourée d'une enveloppe à double paroi (5), dans laquelle une enveloppe interne (6) raccordée à un logement de palier (1) pour la roue à aubes de turbine (4) de l'enveloppe (5) comporte deux coques internes (26, 27) assemblées radialement sur la périphérie extérieure et qui, par une barrette de séparation (28) s'étendant radialement par rapport à l'axe rotatif (11) de la roue à aubes de turbine (4), réalise une séparation en deux chambres (29, 30), et une enveloppe extérieure (7) de l'enveloppe (5) raccordant l'enveloppe interne (6) à une certaine distance avec le logement de palier (1) consiste en deux coques extérieures (8, 9) qui recouvrent sensiblement parallèlement par rapport à l'axe de rotation (11) des branches axiales (18, 19) radialement extérieures recouvrant un espace libre (20), et le côté frontal (22) de la branche axiale est fixé sur la surface supérieure (23) de la branche axiale en engagement (18) par soudure.

2. Turbine à gaz d'échappement pour compresseur de suralimentation selon la revendication 1, dans laquelle les coques internes (26, 27) de l'enveloppe interne (6) sont assemblées avec la barrette de séparation (28) par soudure.

3. Turbine à gaz d'échappement pour compresseur de suralimentation selon la revendication 1, dans laquelle les coques internes (26, 27) de l'enveloppe interne (6) sont assemblées pendant le positionnement de la barrette de séparation (28) par pliage.

4. Turbine à gaz d'échappement pour compresseur de suralimentation selon l'une des revendications 1 à 3, dans laquelle, dans l'espace libre (20) entre les branches axiales radialement externes (18, 19) les coques externes (8, 9) de l'enveloppe externe (7), sont intégrés des moyens (21) de transformation de l'énergie cinétique.

5. Turbine à gaz d'échappement pour compresseur de suralimentation selon l'une des revendications 1 à 4, dans laquelle des zones marginales internes (36, 25) limitrophes de l'axe de rotation (11) de la roue à aubes de la turbine (4) sont enfichées dans le logement de palier (1) pour la roue à aubes de turbine (4), détournées de la deuxième coque interne (27) et de la deuxième coque externe (9) dans une configuration tubulaire et assemblées ensemble.

6. Turbine à gaz d'échappement pour compresseur de suralimentation selon la revendication 5, dans laquelle la zone marginale (12), située radialement à l'intérieur d'une branche radiale (10) s'étendant transversalement par rapport à l'axe rotatif (11) de la roue à aubes de turbine (4, de la coque externe (8) présentant une branche axiale d'engagement (18) de l'enveloppe externe (7), est raccordée à une bride (15) fixée sur le logement de palier (1) pour la roue à aubes de turbine (4).

7. Turbine à gaz d'échappement pour compresseur de suralimentation selon l'une des revendications 1 à 6, dans laquelle la zone marginale (31) située radialement à l'intérieur de la coque interne (26) limitrophe de la roue à aubes de turbine (4) est raccordée au logement de palier (1) avec une bride (15) fixée sur le logement de palier (1).

8. Turbine à gaz d'échappement pour compresseur de suralimentation selon l'une des revendications 1 à 7, dans laquelle l'épaisseur des coques internes (26, 27) est dimensionnée de façon à être inférieure à l'épaisseur des coques externes (8, 9).
